(19) **Europäisches Patentamt**

**European Patent Office**

**Office européen des brevets**

(11) **EP 0 905 971 B1**

(12) **EUROPEAN PATENT SPECIFICATION**

(45) Date of publication and mention
of the grant of the patent:
**05.07.2006 Bulletin 2006/27**

(51) Int Cl.:
**H04N 3/15** (2006.01)

(21) Application number: **98307665.4**

(22) Date of filing: **22.09.1998**

(54) **Photoelectric conversion apparatus**

Photoelektrische Umwandlungsvorrichtung

Appareil de conversion photo-électrique

(84) Designated Contracting States:
**DE FR GB IT NL**

(30) Priority: **29.09.1997 JP 26354697**

(43) Date of publication of application:
**31.03.1999 Bulletin 1999/13**

(73) Proprietor: **CANON KABUSHIKI KAISHA**
**Tokyo (JP)**

(72) Inventor: **Kochi, Tetsunobu,**
**c/o CANON KABUSHIKI KAISHA**
**Ohta-ku,**
**Tokyo (JP)**

(74) Representative: **Beresford, Keith Denis Lewis et al**
**BERESFORD & Co.**
**16 High Holborn**
**London WC1V 6BX (GB)**

(56) References cited:
**EP-A- 0 757 497**

• **PATENT ABSTRACTS OF JAPAN vol. 1997, no. 06, 30 June 1997 (1997-06-30) & JP 09 051480 A (NIKON CORP), 18 February 1997 (1997-02-18)**
• **PATENT ABSTRACTS OF JAPAN vol. 1998, no. 14, 31 December 1998 (1998-12-31) & JP 10 233964 A (NIKON CORP), 2 September 1998 (1998-09-02)**

**Description**

The present invention relates to a photoelectric conversion apparatus having photoelectric conversion elements arrayed in a matrix.

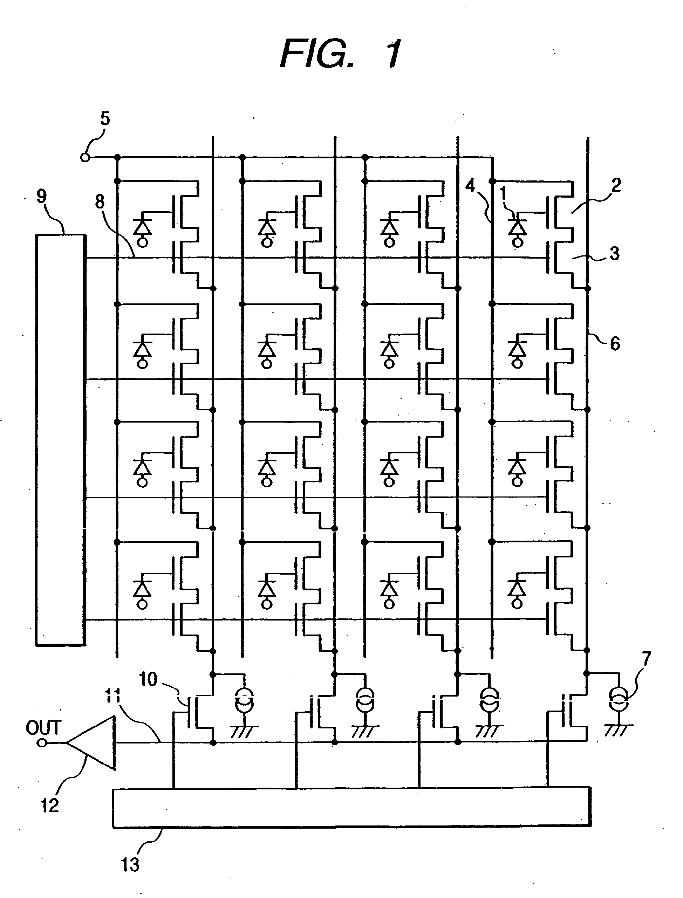

Fig. 1 is a diagram for explaining a conventional photoelectric conversion apparatus. Referring to Fig. 1, photoelectric conversion elements 1 (e.g. photodiodes) store charges in accordance with the amounts of incident light and form a two-dimensional array ($4 \times 4$ elements in Fig. 1). One terminal of the photoelectric conversion element 1 is connected to the gate of a source follower input MOS 2. The source of the source follower input MOS 2 is connected to the drain of a vertical selection switch MOS 3. The drain of the source follower input MOS 2 is connected to a power supply terminal 5 through a power supply line 4. The source of the vertical selection switch MOS 3 is connected to a load power supply 7 through a vertical output line 6. The source follower input MOS 2, the vertical selection switch MOS 3, and load power supply 7 form a source follower circuit. The photoelectric conversion element 1, the source follower input MOS 2, and the vertical selection switch MOS 3, constitute a pixel.

A signal voltage of the photoelectric conversion element 1 is induced at the gate of the source follower input MOS 2 in accordance with the charge accumulated in the photoelectric conversion element of each pixel. This signal voltage is current-amplified and read by the source follower circuit.

The gate of the vertical selection switch MOS 3 is connected to a vertical scanning circuit 9 via a vertical gate line 8. An output signal from the source follower circuit is externally output via the vertical output line 6, a horizontal transfer MOS switch 10, a horizontal output line 11, and an output amplifier 12. The gate of each horizontal transfer MOS switch 10 is connected to a horizontal scanning circuit 13. With this arrangement, the signal voltages of the respective photoelectric conversion elements sequentially turn on the vertical selection switch MOS 3 by the pulse voltages on the vertical gate lines 8 connected to the vertical scanning circuit 9. The signal voltages are read onto the corresponding vertical lines. The horizontal transfer MOS switches 10 are sequentially turned on by a shift register signal of the horizontal scanning circuit 13. The signal voltages of the respective photoelectric conversion elements are output from the output amplifier 12 as time-serial signals in units of pixels.

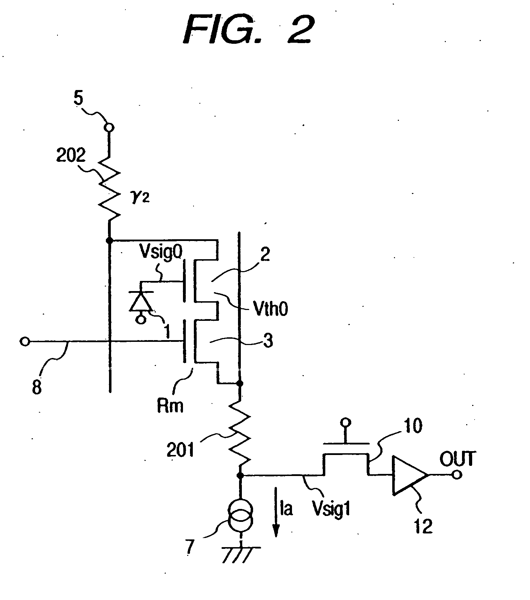

In the prior art described above, since finite resistances are distributed in the vertical output lines 6, shading in the vertical direction occurs in the signals due to potential drops across the resistances. For descriptive convenience, one pixel and its peripheral portion are illustrated in Fig. 2. Referring to Fig. 2, a resistance 201 is distributed on the vertical output line 6. Let M rows of pixels be present, and r1 be the resistance value of the vertical output line per row. Then, the total resistance between the pixels on the Kth row and the horizontal transfer MOS switch 10 is defined as:

$$r1 \times K \quad (1 \leq K \leq M) \qquad \ldots(1)$$

Let Ia, Rm, Vth0, and Vsig0 be the current flowing through the load power supply 7, the series resistance of the vertical selection switch MOSs 3, the threshold voltage of the source follower input MOS 2, and the signal voltage on the gate of the source follower input MOS 2, respectively. Then, a signal Vsig1 current-amplified and read by the source follower circuit is defined as:

$$Vsig1 = Vsig0 - Vth0 - Ia \times Rm - Ia \times r1 \times K$$
$$(1 \leq K \leq M) \qquad \ldots(2)$$

That is, even if the identical signal voltages Vsig0 is induced at the pixels, the voltages Vsig1 read in units of rows have differences due to voltage drops by the resistances r1 of the vertical output lines 6, thus causing vertical shading. The image quality is greatly deteriorated.

In recent years, the number of pixels increased and the size decreased in the development of photoelectric conversion apparatuses. The wirings used in the photoelectric conversion apparatuses tend to be thin and long. Voltage drop by the resistance r1 of the vertical output line 6 poses a serious problem.

Another problem is posed by different dynamic ranges of the source follower circuit in units of rows because a finite resistance is distributed on the power supply line 4. This problem will be described with reference to Fig. 2. A resistance 202 is distributed on the power supply line 4. Let M rows of pixels be present, and r2 be the resistance value of the power supply line per row. Then, the total resistance between the pixels on the Kth row and the power supply terminal 5 is:

$$r2 \times K \ (1 \leq K \leq M) \qquad\qquad ...(3)$$

Letting Vd be the voltage of the power supply terminal 5, the source follower input MOS 2 must operate as a pentode in order to operate the source follower circuit as a linear amplifier. A condition for this is given by:

$$Vd - Ia \times r2 \times K > Vsig0 - Vth0 \ (1 \leq K \leq M) \ ...(4)$$

The above condition can be rewritten as:

$$Vsig0 < Vd + Vth0 - Ia \times r2 \times K \ (1 \leq K \leq M)\, .....(5)$$

The signal voltage values not satisfying the above condition are different depending on the rows. That is, the signals have different dynamic ranges.

This results in saturation voltage shading or output shading on the small-light-amount characteristic side due to a combination with the polarities of the photodiode 1, thereby greatly degrading the image quality.

It is now sought to take account of the foregoing problems and to prevent, or at least reduce, degradation of image quality in a photoelectric conversion apparatus.

The photoelectric conversion apparatus considered herein is an apparatus of the known type comprising:

a pixel array in which the pixels are arranged in rows and have a matrix wiring arrangement in which the pixels are connected to vertical output lines, each pixel having a photoelectric conversion element and an amplification means for amplifying signal charge accumulated in the respective photoelectric conversion element, output means, connected to said vertical output lines; and

a respective current source load means connected to each vertical output line at a node between the pixels connected thereto and said output means.

In accordance with the present invention, in this photoelectric conversion apparatus, the load means are alternately at respective opposite sides of the array and are connected to every one or, alternatively, to every plural number, of said vertical output lines.

The current source load means aforesaid may be constituted by a constant current source or alternatively may be constituted by a low resistance type current source.

In the preferred embodiment discussed in detail below, the amplification means is provided by an MOS transistor, and this transistor and the connected load means are configured to constitute a source follower type circuit.

Also in the embodiments the vertical output lines are connected by horizontal selection switches to horizontal output lines located each side above and below the pixel matrix array.

It has been known previously to provide horizontal output lines each side of a pixel array. In European Patent Application EP-A-0757497, as shown in Figure 4 thereof, cyan and yellow pixels are arranged alternately in odd rows and magenta and white colour sub-pixels are arranged alternately in even numbered rows. The cyan and magenta pixels are arranged in odd numbered columns and the yellow and white pixels are arranged in even numbered columns. Each column of cyan and magenta sub-pixels are connected to a vertical output line and the signals from these sub-pixels are output via horizontal output lines on one side of the pixel matrix array whilst signals from the yellow and white sub-pixels are connected to vertical output lines to respective horizontal output lines on the other side of the pixel matrix array. In operation, signal charge developed by the sub-pixels is transferred to the vertical output lines whilst the vertical output lines are isolated. In this state, the vertical output lines are at a changing floating potential. The vertical output lines are not connected to any constant current node. Signals are read by transferring charge from the vertical output lines to a store capacitor and the voltage on the store capacitor is then read via an amplifier.

With the above arrangements, a high-quality photoelectric conversion apparatus can be provided.

The above and other features, and advantages of the present invention will be apparent from the detailed description of preferred embodiments taken in conjunction with the accompanying drawings.

In the accompanying drawings:

Fig. 1 is a diagram representing a conventional photoelectric conversion apparatus;

Fig. 2 is a circuit diagram for explaining the operation of the conventional photoelectric conversion apparatus;

Fig. 3 is a diagram representing a first embodiment of the present invention;

Fig. 4 is a diagram representing a background example, features of which can be applied to a second embodiment of the present invention;

Fig. 5 is a circuit diagram of an alternative pixel structure and peripheral circuit, which can be used in embodiments of the present invention; and

Fig. 6 is a circuit diagram of another alternative pixel structure and peripheral circuit which can be used in embodiments of the present invention.

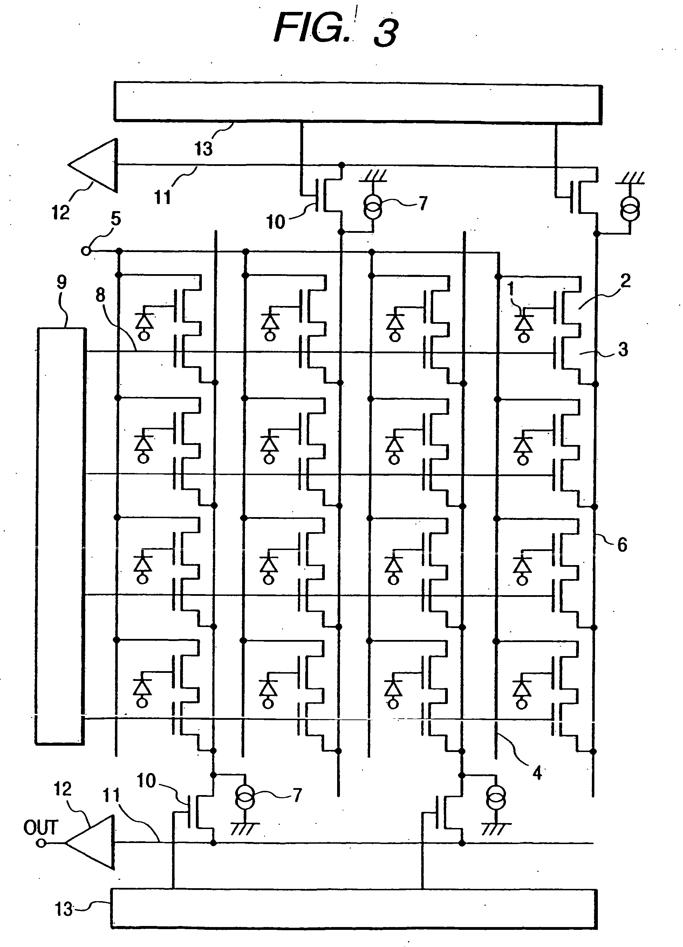

Fig. 3 is a diagram representing a first embodiment of the present invention. Constant current sources are located between the pixels and the outputs at the ends of each vertical output line, and at the same time, the signal voltages in units of one or plural columns are alternately output in opposite directions.

Referring to Fig. 3, photoelectric conversion elements 1 (e.g., photodiodes) store charges in accordance with the amounts of incident light and form a two-dimensional array (4 x 4 elements in Fig. 3). One terminal of the photoelectric conversion element 1 is connected to the gate of a source follower input MOS 2. The source of the source follower input MOS 2 is connected to the drain of a vertical selection switch MOS 3. The drain of the source follower input MOS 2 is connected to a power supply terminal 5 through a power supply line 4. The source of the vertical selection switch MOS 3 is connected to a load power supply 7 through a vertical output line 6. The source follower input MOS 2, the vertical selection switch MOS 3, and load power supply 7 form a source follower circuit. The photoelectric conversion element 1, the source follower input MOS 2, and the vertical selection switch MOS 3, constitute a pixel in this embodiment.

A signal voltage of the photoelectric conversion element 1 is induced at the gate of the source follower input MOS 2 in accordance with the charge accumulated in the photoelectric conversion element of each pixel. This signal voltage is current-amplified and read by the source follower circuit.

The gate of the vertical selection switch MOS 3 is connected to a vertical scanning circuit 9 via a vertical gate line 8. An output signal from the source follower circuit is externally output via the vertical output line 6, a horizontal transfer MOS switch 10, a horizontal output line 11, and an output amplifier 12. The gate of each horizontal transfer MOS switch 10 is connected to a horizontal scanning circuit 13. With this arrangement, the signal voltages of the respective photoelectric conversion elements sequentially turn on the vertical selection switch MOSs 3 by the pulse voltages on the vertical gate lines 8 connected to the vertical scanning circuit 9. The signal voltages are read onto the corresponding vertical lines. The horizontal transfer MOS switches 10 are sequentially turned on by a shift register signal of the horizontal scanning circuit 13. The signal voltages of the respective photoelectric conversion elements are output from the output amplifier 12 as time-serial signals in units of pixels.

The horizontal transfer MOS switches 10 are arranged at vertically opposite sides of the pixel array, as shown, and those at each side are connected to alternate ones of the vertical output lines 6.

Each horizontal scanning circuit 13 outputs a signal from the corresponding horizontal transfer MOS switch 10 to the corresponding horizontal output line 11 for each vertical output line 6. The constant current sources 7 serving as the loads of the source follower circuits are connected to the sources of the horizontal transfer MOS switches 10 on the vertical output line 6 side. The resistance values of the vertical output lines are different depending on the locations of the vertical gate lines 8. The horizontal scanning circuits 13 are arranged on the two terminals of each vertical output line 6. The horizontal scanning circuits 13 on the two terminals synchronously operate to turn on each horizontal transfer MOS switch 10 in units of vertical output lines 6. Each horizontal scanning circuit 13 reads an optical charge signal from the photoelectric conversion element 1 to the corresponding horizontal output line 11, thereby outputting the signal from the corresponding output amplifier 12. In this case, the horizontal transfer MOS switches 10 at the two terminals are turned on to increase the read rate.

Although not shown, the output signals from the output amplifiers 12 at the two terminals may be concatenated as a time-serial image signal sequence and output as a video signal via a sample/hold circuit, a shading correction circuit, and the like.

With the above arrangement, assume a photoelectric conversion apparatus having elements at M rows and N columns. A signal voltage read from a pixel at the Kth row and Lth column ($1 \leq K \leq M$, $1 \leq L \leq N$) is given by:

$$VsigKL = Vsig0 - Vth0 - Ia \times Rm - Ia \times rl \times K$$

$$(1 \leq K \leq M) \quad \ldots(6)$$

(where Rm is the series ON resistance value of the vertical selection switch MOS 3, r1 is the resistance value of the vertical output line 6 per row, Vsig0 is the output voltage of the photoelectric conversion element 1, Vth0 is the threshold voltage of the source follower input MOS 2, and Ia is the current of the constant current source 7). A signal voltage read from a pixel at the Kth row and (L+1)th column ($1 \le K \le M$, $1 \le L \le N$) is influenced by a different resistance value because the voltage extraction direction is reversed, and becomes:

$$VsigKL+1 = Vsig0 - Vth0 - Ia \times Rm \quad - Ia \times rl \times$$

$$(M - K) \qquad (1 \le K \le M) \qquad ...(7)$$

As can be apparent from the above equation, for example, when odd-numbered columns are taken into consideration, shading has occurred in this embodiment as in the conventional case, but shading opposite to that of the odd-numbered columns has occurred in even-numbered columns, thereby averaging and canceling shading and hence greatly improving the image quality.

In practice, a peripheral circuit can be mounted outside or inside the device to add or average adjacent signals to further reduce shading. In a photoelectric conversion apparatus for sensing a colour image using colour filters of, e.g., complementary colours, processing for adding and reading adjacent signals is generally performed by adding and reading signals of adjacent pixels, and reconstructing a video signal by external matrix operations. In this case, the use of the arrangement of the present invention allows reduction in shading without causing any trouble.

This embodiment has exemplified a case in which constant current sources are alternately arranged at respective opposite sides of the array and are connected to the columns. The constant current sources may be connected to every two or three columns, depending on the degree of shading, to obtain the same effect as described above. The constant current sources may be connected alternately to all columns or, alternatively, to the columns at only the central portion of the light-receiving section of the photoelectric conversion apparatus.

In this embodiment, a source follower circuit using a constant current source as a constant current load has been described. However, the present invention is not limited to this. The same effect as in this embodiment can be obtained with the use of a low resistance type current source as current source load. This holds true for the use of an inverting amplifier type circuit which is not a source follower circuit but a circuit for inverting and amplifying the charges accumulated in a photoelectric conversion element and outputting the charges onto a vertical output line, e.g. as disclosed in U.S.P. No. 5,698,844.

In addition, the same effect can be also obtained even when a signal is stored temporarily in a capacity and then read out therefrom, instead of being input into the amplifier directly.

In this embodiment, the arrangement is one in which the constant current sources 7 are located on vertically the same side as the direction of outputting the signal voltages from the source follower circuits, and at the same time, the signal voltages in units of columns or plural columns are alternately output in opposite directions. This arrangement has a function of correcting shading resulting from level differences of signals output from the source follower circuits of the respective rows.

In this arrangement, the level differences of voltage signals, between different rows, that are output from the source follower circuits are alternately opposite to each other.

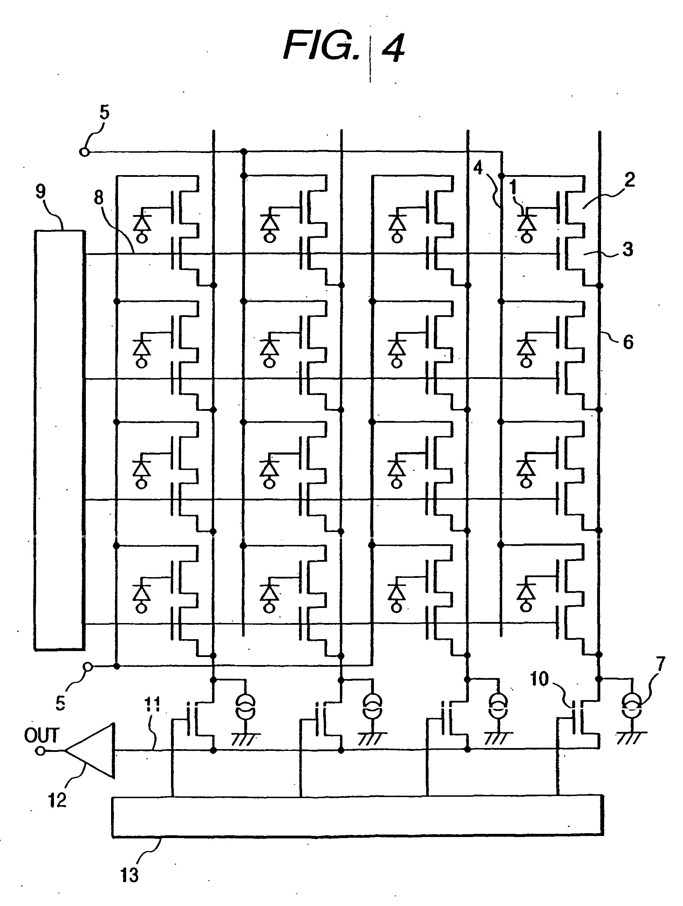

Fig. 4 is a diagram representing a background example. This example of photoelectric apparatus can be adapted, as explained later, to provide a second embodiment of the present invention. The power supply terminals of source follower circuits are alternately arranged at vertically opposite positions relative to the matrix array.

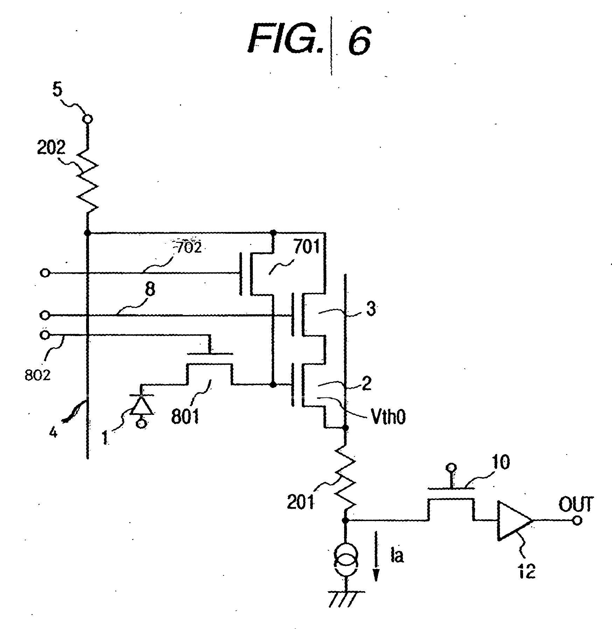

Referring to Fig. 4, photoelectric conversion elements 1 (e.g., photodiodes) store charges in accordance with the amounts of incident light and form a two-dimensional array (4 x 4 elements in Fig. 6). One terminal of the photoelectric conversion element 1 is connected to the gate of a source follower input MOS 2. The source of the source follower input MOS 2 is connected to the drain of a vertical selection switch MOS 3. The drain of the source follower input MOS 2 is connected to a power supply terminal 5 through a power supply line 4. The source of the vertical selection switch MOS 3 is connected to a load power supply 7 through a vertical output line 6. The source follower input MOS 2, the vertical selection switch MOS 3, and load power supply 7 form a source follower circuit. The photoelectric conversion element 1, the source follower input MOS 2, the vertical selection switch MOS 3, and load power supply 7 form a pixel.

A signal voltage of the photoelectric conversion element 1 is induced at the gate of the source follower input MOS 2 in accordance with the charge accumulated in the photoelectric conversion element of each pixel. This signal voltage is current-amplified and read by the source follower circuit. The power supplies of the respective source follower circuits are connected to the power supply lines 4 in units of rows. The power supply lines 4 are alternately connected to the power supply terminals 5.

The gate of the vertical selection switch MOS 3 is connected to a vertical scanning circuit 9 via a vertical gate line 8. An output signal from the source follower circuit is externally output via the vertical output line 6, a horizontal transfer MOS switch 10, a horizontal output line 11, and an output amplifier 12. The gate of each horizontal transfer MOS switch 10 is connected to a horizontal scanning circuit 13. With this arrangement, the signal voltages of the respective photoelectric conversion elements sequentially turn on the vertical selection switch MOSs 3 by the pulse voltages on the vertical gate lines 8 connected to the vertical scanning circuit 9. The signal voltages are read onto the corresponding vertical lines. The horizontal transfer MOS switches 10 are sequentially turned on by a shift register signal of the horizontal scanning circuit 13. The signal voltages of the respective photoelectric conversion elements are output from the output amplifier 12 as time-serial signals in units of pixels.

With the above arrangement, the dynamic range of a signal read from a pixel at the Kth row and Lth column ($1 \leq K \leq M$, $1 \leq L \leq N$) falls within the range:

$$\text{VsigKL} < \text{Vd} + \text{Vth0} - \text{Ia} \times \text{r2} \times \text{K}$$
$$(1 \leq K \leq M) \qquad \ldots(8)$$

(where Vd is the power supply voltage, VthO is the threshold voltage of the source follower input MOS 2, and r2 is the resistance value between the drain of the source follower Input MOS 2 corresponding to each vertical gate line 8 of the power supply line 4 and the drain of the source follower input MOS 2 corresponding to the next vertical gate line 8). At this time, the dynamic range of a signal read from a pixel at the Kth row and (L+1)th row ($1 \leq K \leq M$, $1 \leq L \leq N$) is:

$$\text{VsigKL} < \text{Vd} + \text{Vth0} - \text{Ia} \times \text{r2} \times (\text{M} - \text{K})$$
$$(1 \leq K \leq M) \qquad \ldots(9)$$

As is apparent from the above condition, for example, when odd-numbered columns are taken into consideration, shading of the saturation voltage of the photoelectric conversion characteristics of the photoelectric conversion element 1 or small-light-amount side output shading has occurred in this example as in the conventional case, but shading opposite to that of the odd-numbered columns has occurred in even-numbered columns, thereby averaging and cancelling shading and hence greatly improving the image quality.

This example has exemplified a case in which constant current sources are alternately connected to the columns. The constant current sources may be connected to every two or three columns, depending on the degree of shading, to obtain the same effect as described above. The constant current sources may be connected alternately to all columns or, alternatively, to the columns at only the central portion of the light-receiving section of the photoelectric conversion apparatus.

In this example, a source follower circuit using a constant current source as a constant current load has been described. However, the same effect as in this example can be obtained with the use of a low resistance type load as a constant current load. This also holds true for the use of an inverting amplifier type circuit which is not a source follower circuit but a circuit for inverting and amplifying the charges accumulated in a photoelectric conversion element and outputting the charges onto a vertical output line, e.g. as disclosed in U.S.P. No. 5,698,844.

In addition, the same effect can be also obtained even when each signal is stored temporarily in a capacity and then read out therefrom, instead of being input into the amplifier directly.

In this example, the power supply voltage supply means is an arrangement in which the power supply terminals 5 of the source follower circuits are alternately located at the ends of the columns to each side of the matrix array. This arrangement has a function of alternately reversing the directions of vertically reducing the power supply voltage supply amounts in units of columns in order to output signal voltages from the source follower circuits.

When a current read type amplifier is used, a new effect, i.e. a reduction in output current shading can be obtained.

Features of the above example can be combined with the first embodiment to further reduce or prevent occurrence of shading. Thus, in a second embodiment, when the different power supply terminals located at two terminals of the power supply lines shown in the example are provided and the horizontal output lines 11 are located at two terminals of the horizontal output lines 11 as shown in the first embodiment, both shading attributed to the resistance of the vertical output lines and shading attributed to the resistance of the power supply lines can be eliminated.

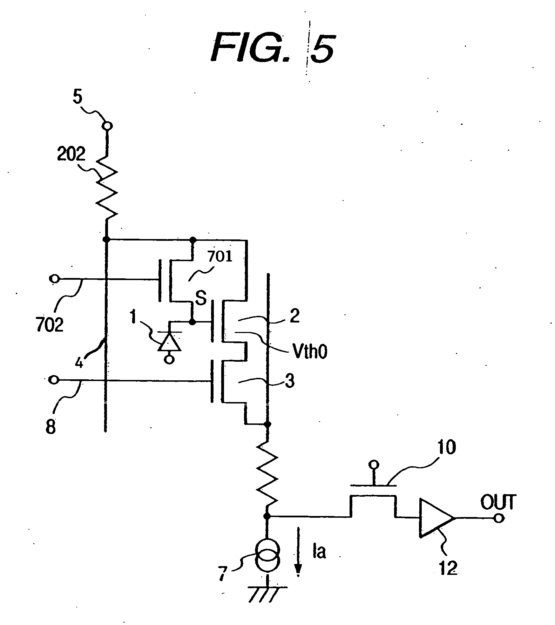

An alternative pixel structure will now be described. Referring to Fig. 5, a reset switch 701 removes the charge accumulated in a photoelectric conversion element 1. The source of the reset switch 701 is connected to the photoelectric conversion element 1, and the drain of the reset switch 701 is connected to a power supply line 4 common to the source follower circuit. A reset gate line 702 controls the reset switch 701. This pixel structure is applicable to both the first and second embodiments. With this pixel structure, as compared with the pixel structure of the first embodiment, the reset voltage of the photoelectric conversion element 1 can be accurately controlled. DC level variations of the signal voltages produced by reset voltage variations, and any after image produced by the reset voltage remaining upon irradiation of strong ling can be reduced. In particular, when this arrangement is applied to the second embodiment described above, power supply terminals 5 are connected alternately to the vertical supply lines in units of columns or in units of a plurality of columns, thereby greatly reducing signal voltage shading.

Fig. 6 is a diagram for explaining another alternative pixel structure. Referring to fig. 6, a charge transfer switch 801 perfectly depletes and transfers the signal charge from a photoelectric conversion element 1 to a source follower input MOS 2. A transfer gate line 802 controls the transfer switch 801. In general, to increase the sensitivity of the photoelectric conversion apparatus, the size of the photoelectric conversion element 1 is increased and the conversion amount is increased in converting an optical signal into an electrical signal. The parasitic capacitance value of the gate of the source follower input MOS 2 increases accordingly, the read rate lowers, and the sensitivity cannot efficiently increase. With the arrangement of this embodiment, however, the capacitance value of the input gate of the source follower input MOS 2 is designed to be smaller than that of the photoelectric conversion element 1 (e.g., a photodiode), and perfect depletion transfer is performed to increase the sensitivity.

As shown in Fig. 6, a vertical selection switch MOS 3 is inserted between a power supply line 4 and the source follower input MOS 2, and the voltage drop accounted for by the resistance of the vertical selection switch MOS 3:

$$Ia \times Rm \qquad\qquad ...(10)$$

in equation (2) can be eliminated, thereby obtaining a wide dynamic range.

The above described pixel structure can be applied to both the first and second embodiments to obtain the effect described above.

In the foregoing embodiments, the same effect can be obtained regardless of using NMOS or PMOS transistors.

The present invention is not limited to the pixel structures and peripheral circuits shown in the foregoing embodiments. For example, an arrangement in which the charge accumulated in the photoelectric conversion element is not amplified before being output, i.e. the charge is output without amplification can be employed. The transistor is not limited to the MOS element, but can be an SIT or BASIS element.

As has been described above, vertical shading of the output signals from the photoelectric conversion apparatus can be reduced.

In addition, vertical saturation voltage shading of the output signal from the photoelectric conversion apparatus can also be reduced, and the dynamic range of the output from each photoelectric conversion element can be widened.

Many widely different embodiments of the present invention may be constructed without departing from the scope of the present invention. It should be understood that the present invention is not limited to the specific examples embodiments described in the specification, except as defined in the appended claims.

**Claims**

1. A photoelectric conversion apparatus comprising:

   a pixel array in which the pixels (1-3) are arranged in rows and have a matrix wiring arrangement in which the pixels are connected to vertical output lines (6), each pixel having a photoelectric conversion element (1) and an amplification means (2) for amplifying signal charge accumulated in the respective photoelectric conversion element (1);
   output means (10-13), connected to said vertical output lines; and
   a respective current source load means (7) connected to each vertical output line at a node between the pixels connected thereto and said output means; wherein
   said load means (7) are alternately at respective opposite sides of the array and are connected to every one or, alternatively, to every plural number, of said vertical output lines (6).

2. Apparatus according to claim 1 wherein each said current source load means (7) is constituted by a constant current source.

3. Apparatus according to claim 1 wherein each said current source load means (7) is constituted by a low resistance type current source.

4. Apparatus according to any preceding claim wherein each amplification means (2) and the connected load means (7) constitute a source follower MOS type circuit.

5. Apparatus according to any preceding claim in which each pixel comprises said photoelectric conversion element (1), an MOS transistor (2) as amplification means, and an MOS transistor (3) as a vertical selection switch means, wherein said amplification means MOS transistor (2) and said vertical selection switch means MOS transistor (3) are connected in series between a power supply line (4) and one of said vertical output lines (6), and said photoelectric conversion element (1) is connected to the gate of said amplification means MOS transistor (2).

6. Apparatus according to claim 5 wherein each pixel further includes a reset switch MOS transistor (701) connected between said power supply line (4) and the gate of said amplification means MOS transistor (2).

7. Apparatus according to claim 6 wherein each pixel further includes a charge transfer switch MOS transistor (801) interposed between said photoelectric conversion element (1) and the gate of said amplification means MOS transistor (2), and wherein the capacitance of the gate of the amplification means MOS transistor (2) is smaller than that of the photoelectric conversion element (1).

8. Apparatus according to any one of the preceding claims 5-7 wherein pixels in each column of the array have a common power supply line (4) and the power supply lines (4) are connected alternately to power terminals (5) located at each of said respective opposite sides of the pixel array, corresponding to every column, or alternatively, corresponding to every plural number of columns, of said pixels.

9. An apparatus according to any preceding claim wherein said output means (10-13) comprises first and second horizontal output lines (11) which are located at said respective opposite sides of the pixel array and which are connected alternately, via a respective horizontal transfer switch (10) at each said node, to said every one or alternatively, to said every plural number, of said vertical output lines (6), respectively.

10. An image pickup apparatus comprising a photoelectric conversion apparatus as claimed in any preceding claim, and signal processing means operable on signals output from said photoelectric conversion apparatus.

11. An apparatus according to claim 10 wherein said signal processing means is operable on said signals, output from said photoelectric conversion apparatus, to add or to average those signals that are derived from adjacent pixels amongst the pixels of the pixel array.

**Patentansprüche**

1. Fotoelektrische Wandlervorrichtung, mit
einer Bildelementanordnung, bei der die Bildelemente (1 bis 3) zeilenweise in Matrixform angeordnet und mit Vertikal-Ausgangsleitungen (6) verbunden sind, wobei jedes Bildelement ein fotoelektrisches Wandlerelement (1) und eine Verstärkungseinrichtung (2) zur Verstärkung der in dem jeweiligen fotoelektrischen Wandlerelement (1) akkumulierten Signalladung umfasst,
einer mit den Vertikal-Ausgangsleitungen verbundenen Ausgabeeinrichtung (10 bis 13), und
einer jeweiligen Stromquellen-Lasteinrichtung (7), die mit jeder Vertikal-Ausgangsleitung über einen Knotenpunkt zwischen den mit der Vertikal-Ausgangsleitung verbundenen Bildelementen und der Ausgabeeinrichtung verbunden ist, wobei
die Stromquellen-Lasteinrichtungen (7) abwechselnd an jeweils entgegengesetzten Seiten der Bildelementanordnung vorgesehen und mit jeder Vertikal-Ausgangsleitung (6) oder alternativ mit einer jeweiligen Mehrzahl der Vertikal-Ausgangsleitungen (6) verbunden sind.

2. Vorrichtung nach Anspruch 1, bei der die Stromquellen-Lasteinrichtungen (7) jeweils von einer Konstantstromquelle gebildet werden.

3. Vorrichtung nach Anspruch 1, bei der die Stromquellen-Lasteinrichtungen (7) jeweils von einer niederohmigen Stromquelle gebildet werden.

4. Vorrichtung nach zumindest einem der vorhergehenden Ansprüche, bei der jede Verstärkungseinrichtung (2) und die damit verbundene Lasteinrichtung (7) eine MOS-Sourcefolgerschaltung bilden.

**5.** Vorrichtung nach zumindest einem der vorhergehenden Ansprüche, bei der jedes Bildelement das fotoelektrische Wandlerelement (1), einen MOS-Transistor (2) als Verstärkungseinrichtung und einen MOS-Transistor (3) als Vertikal-Wählschaltereinrichtung umfasst, wobei der die Verstärkungseinrichtung bildende MOS-Transistor (2) und der die Vertikal-Wählschaltereinrichtung bildende MOS-Transistor (3) in Reihe zwischen eine Stromversorgungsleitung (4) und eine der Vertikal-Ausgangsleitungen (6) geschaltet sind und das fotoelektrische Wandlerelement (1) mit der Gate-Elektrode des die Verstärkungseinrichtung bildenden MOS-Transistors (2) verbunden ist.

**6.** Vorrichtung nach Anspruch 5, bei der jedes Bildelement außerdem einen zwischen die Stromversorgungsleitung (4) und die Gate-Elektrode des die Verstärkungseinrichtung bildenden MOS-Transistors (2) geschalteten MOS-Rückstellschalttransistor (701) umfasst.

**7.** Vorrichtung nach Anspruch 6, bei der jedes Bildelement außerdem einen zwischen dem fotoelektrischen Wandlerelement (1) und der Gate-Elektrode des die Verstärkungseinrichtung bildenden MOS-Transistors (2) angeordneten MOS-Ladungsübertragungsschalttransistor (801) umfasst, wobei die Gate-Kapazität des die Verstärkungseinrichtung bildenden MOS-Transistors (2) kleiner als diejenige des fotoelektrischen Wandlerelementes (1) ist.

**8.** Vorrichtung nach zumindest einem der vorhergehenden Ansprüche 5 bis 7, bei der Bildelementen einer jeden Spalte der Anordnung eine gemeinsame Stromversorgungsleitung (4) zugeordnet ist und die Stromversorgungsleitungen (4) abwechselnd mit Stromversorgungsanschlüssen (5) verbunden sind, die an jeder der entgegengesetzten Seiten der Bildelementanordnung entsprechend einer jeden Spalte oder alternativ entsprechend einer jeweiligen Mehrzahl von Spalten der Bildelemente angeordnet sind.

**9.** Vorrichtung nach zumindest einem der vorhergehenden Ansprüche, bei der die Ausgabeeinrichtung (10 bis 13) eine erste und eine zweite Horizontal-Ausgangsleitung (11) umfasst, die an den jeweils entgegengesetzten Seiten der Bildelementanordnung angeordnet und abwechselnd über einen an jedem Knotenpunkt angeordneten jeweiligen Horizontal-Übertragungsschalter (10) mit jeder Vertikal-Ausgangsleitung (6) oder alternativ mit der jeweiligen Mehrzahl der Vertikal-Ausgangsleitungen (6) verbunden sind.

**10.** Bildaufnahmegerät mit einer fotoelektrischen Wandlervorrichtung nach zumindest einem der vorhergehenden Ansprüche und einer Signalverarbeitungseinrichtung, die in Abhängigkeit von den von der fotoelektrischen Wandlervorrichtung abgegebenen Signalen steuerbar ist.

**11.** Gerät nach Anspruch 10, bei dem die Signalverarbeitungseinrichtung in Abhängigkeit von den von der fotoelektrischen Wandlervorrichtung abgegebenen Signalen zur Addition oder Mittelung der von benachbarten Bildelementen in der Bildelementanordnung abgeleiteten Signale steuerbar ist.

**Revendications**

**1.** Appareil de conversion photoélectrique comportant :

un réseau de pixels dans lequel les pixels (1-3) sont agencés en rangées et ont un agencement de câblage en matrice dans lequel les pixels sont connectés à des lignes verticales (6) de sortie, chaque pixel ayant un élément de conversion photoélectrique (1) et un moyen d'amplification (2) destiné à amplifier une charge de signal accumulée dans l'élément de conversion photoélectrique respectif (1) ;
un moyen de sortie (10-13) connecté auxdites lignes verticales de sortie ; et
un moyen de charge respective (7) à source de courant connecté à chaque ligne verticale de sortie au niveau d'un noeud entre les pixels qui lui sont connectés et ledit moyen de sortie ; dans lequel
lesdits moyens de charge (7) sont situés alternativement sur des côtés opposés respectifs du réseau et sont connectés à chacune desdites lignes verticales (6) de sortie ou bien, en variante, à toutes les un certain nombre desdites lignes verticales de sortie (6).

**2.** Appareil selon la revendication 1, dans lequel chacun desdits moyens (7) de charge à source de courant est constitué d'une source de courant constant.

**3.** Appareil selon la revendication 1, dans lequel chacun desdits moyens (7) de charge à source de courant est constitué d'une source de courant du type à basse résistance.

**4.** Appareil selon la revendication 1, dans lequel chaque moyen d'amplification (2) et le moyen de charge connecté (7) constituent un circuit du type MOS à source suiveuse.

**5.** Appareil selon l'une quelconque des revendications précédentes, dans lequel chaque pixel comprend ledit élément de conversion photoélectrique (1), un transistor MOS (2) en tant que moyen d'amplification et un transistor MOS (3) en tant que moyen de commutation de sélection verticale, dans lequel ledit transistor MOS (2) constituant le moyen d'amplification et ledit transistor MOS (3) constituant le moyen de commutation de sélection verticale sont connectés en série entre une ligne (4) d'alimentation en énergie et l'une desdites lignes verticales (6) de sortie, et ledit élément de conversion photoélectrique (1) est connecté à la grille dudit transistor MOS (2) du moyen d'amplification.

**6.** Appareil selon la revendication 5, dans lequel chaque pixel comprend en outre un transistor MOS (701) de commutation de restauration connecté entre ladite ligne (4) d'alimentation en énergie et la grille dudit transistor MOS (2) du moyen d'amplification.

**7.** Appareil selon la revendication 6, dans lequel chaque pixel comprend en outre un transistor MOS (801) de commutation pour un transfert de charge interposé entre ledit élément de conversion photoélectrique (1) et la grille dudit transistor MOS (2) du moyen d'amplification, et dans lequel la capacité de la grille du transistor MOS (2) du moyen d'amplification est inférieure à celle de l'élément de conversion photoélectrique (1).

**8.** Appareil selon l'une quelconque des revendications 5 à 7, dans lequel des pixels dans chaque colonne du réseau ont une ligne commune (4) d'alimentation en énergie et les lignes (4) d'alimentation en énergie sont connectées de façon alternée à des bornes d'énergie (5) situées à chacun desdits côtés opposés respectifs du réseau de pixels, correspondant à chaque colonne ou bien, en variante, correspondant à toutes les un certain nombre de colonnes desdits pixels.

**9.** Appareil selon l'une quelconque des revendications précédentes, dans lequel ledit moyen de sortie (10-13) comporte des première et seconde lignes horizontales (11) de sortie qui sont situées auxdits côtés opposés respectifs du réseau de pixels et qui sont connectées de façon alternée, par l'intermédiaire d'un commutateur de transfert horizontal respectif (10) au niveau de chacun desdits noeuds, à ladite chacune ou bien, en variante, à toutes les un certain nombre desdites lignes verticales de sortie (6), respectivement.

**10.** Appareil capteur d'image comportant un appareil de conversion photoélectrique selon l'une quelconque des revendications précédentes, et un moyen de traitement de signaux pouvant travailler sur des signaux délivrés en sortie dudit appareil de conversion photoélectrique.

**11.** Appareil selon la revendication 10, dans lequel ledit moyen de traitement de signaux peut travailler sur lesdits signaux, délivrés en sortie dudit appareil de conversion photoélectrique, afin d'additionner les signaux, ou d'en établir la moyenne, qui proviennent de pixels adjacents parmi les pixels du réseau de pixels.

# FIG. 1

# FIG. 2

# FIG. 3

# FIG. 4

# FIG. 5

# FIG. 6